# EUROPÄISCHE PATENTANMELDUNG

(11) **EP 2 209 191 A2**
(43) Veröffentlichungstag der Anmeldung: **21.07.2010**
(21) Anmeldenummer: 10000439.9
(22) Anmeldetag: 19.01.2010
(51) Int. Cl.: H02K 21/18

(54) **Einphasiger Synchronmotor mit Hilfsmagnet**

(30) Priorität: 19.01.2009 DE 102009005430
(71) Anmelder: WILO SE, 44263 Dortmund (DE)
(72) Erfinder: Heese, Thomas, 44267 Dortmund (DE)
(74) Vertreter: COHAUSZ DAWIDOWICZ HANNIG & SOZIEN

(57) **Zusammenfassung**

Die Erfindung betrifft einen einphasigen Synchronmotor (1) mit mindestens einer Statorwicklung (3), einem u-förmigen geblechten Statorpaket (2) mit zwei Polschenkeln (4) und einem permanentmagnetischen Rotor (5), der zwischen den Polschenkeln (2) unter Bildung eines magnetischen Spaltes angeordnet ist. Der Synchronmotor (1) weist genau ein zusätzliches magnetisches Mittel (7) oder mehrere zusätzliche magnetische Mittel (7) auf, die sich nicht diametral gegenüberliegen, und das bzw. die in radialer Richtung in einem Abstand neben dem Rotor (5) angeordnet ist bzw. sind, der zwischen der halben und der vierfachen, insbesondere der doppelten Breite des magnetischen Spalts liegt.

## Beschreibung

Die vorliegende Erfindung betrifft einen einphasigen Synchronmotor mit mindestens einer Statorwicklung, einem offenen, u-förmigen geblechten Statorpaket mit zwei Polschenkeln und einem permanentmagnetischen Rotor, der zwischen den Polschenkeln unter Bildung eines magnetischen Spaltes angeordnet ist.

Einphasige Synchronmotoren dieser Gattung sind hinreichend bekannt und werden heutzutage insbesondere als Antriebe für Laugen-, Aquarien- und Teichpumpen verwendet. Bei der Ausbildung einer gleichen Anzahl magnetischer Pole im Stator und im Rotor wird auf den Rotor eine Kraft ausgeübt, die zu einem schwankenden Drehmoment über eine Rotorumdrehung führt. Dies bedingt insbesondere bei niedrigen Drehzahlen einen unruhigen Lauf. Bei einphasigen, zweipoligen Motoren gibt es zwei Positionen pro Rotorumdrehung, in denen kein elektrisches Drehmoment, d.h. kein durch die Bestromung der Statorwicklungen und Krafteinwirkung des daraus resultierenden magnetischen Feldes auf den permanentmagnetischen Rotor einwirkendes Drehmoment erzeugt wird. Diese zwei Positionen entsprechen denjenigen Winkellagen des Rotors, in denen der Nord- und Südpol des Rotors zu den Polschenkeln respektive den Polschuhen ausgerichtet ist, d.h. mit diesen "in-line" liegt. Dies ist bei den Winkelpositionen 90° und 270° der Fall. Diese Winkellagen stellen Ruhepositionen, auch Raststellungen genannt, dar, weil in diesen kein Drehmoment auf den Rotor einwirkt. Der Motor bleibt nach dem Ausschalten auf Grund des ebenfalls im Nulldurchgang fehlenden Rastmoments in einer der beiden Rastpositionen stehen.

Der Anlauf aus einer dieser Positionen gestaltet sich insoweit schwierig, als dass in diesen Winkellagen kein Drehmoment durch elektrische Bestromung der Statorwicklungen, d.h. kein Anzugsmoment erzeugt wird, so dass der Rotor nicht beschleunigen kann, der Motor folglich nicht startet. Auch bei einer Winkellage des Rotors nahe einer der Raststellungen kann kein Anlauf erfolgen, wenn das Haftreibmoment größer als das Anzugsmoment ist.

Zwischen den Raststellungen, bei Synchronmotoren ohne Polmodifikation bei den Winkellagen 0° und 180° des Rotors, ist das elektrisch erzeugte Drehmoment maximal. In diesen Rotorlagen ist das Rastmoment ebenfalls gleich Null. Bezogen auf eine Rotordrehung um 360° wiederholt sich der Verlauf des Rastmoments folglich alle 180°. Das Rastmoment hat demgemäß gegenüber dem elektrischen Drehmoment nur die halbe Periode. Wegen des instabilen Gleichgewichtszustandes wird der Rotor nicht in den Winkellagen 0° und 180° stehen bleiben.

Um einen Anlauf zu gewährleisten, ist es bekannt, Synchronmotoren mit einer Unsymmetrie im Blechschnitt in Gestalt einer bogenförmigen Ausnehmung in den Polbögen der Polschenkel oder Polschuhe auszubilden, wobei sich die Ausnehmungen diametral gegenüberliegen und um einem Winkel zu der Symmetrieebene, in der die Statorpole liegen, versetzt sind. Eine derartige Anordnung ist beispielsweise aus der DE 102006058143 A1 bekannt. Ein geringer Winkelversatz bewirkt eine geringe Verschiebung des Rastmoments gegenüber dem Verlauf des elektrischen Drehmoments und damit eine mechanische Verschiebung der Raststellung, so dass in den neuen "künstlichen" Raststellungen ein elektrisches Moment erzeugt werden kann, das einen Anlauf des Synchronmotors gewährleistet, wenn das Haftmoment das Anlaufmoment nicht übersteigt. Durch Erhöhung des Winkels kann das Rastmoment stärker verschoben, und das Anlaufmoment weiter erhöht werden. Dies ist jedoch nur soweit möglich, wie die physikalisch begrenzte Breite des Polschuhs bzw. des Polschenkels eine Ausnehmung zulässt.

Bei der Verwendung von einphasigen Synchronmotoren in Nassläuferpumpen besteht die Gefahr einer deutlich erhöhten Reibung aufgrund von Verkalkungserscheinungen oder sich absetzender Schwebeteilchen während der Lebensdauer. Dies bedingt wiederum ein erhöhtes Reibmoment beim Anlaufen des Motors, so dass ein sicherer Anlauf über die Gesamte Pumpenlebensdauer, insbesondere bei hartem Wasser auch mit der zuvor genannten Lösung nicht erreicht werden kann. Es sind zusätzliche konstruktive Maßnahmen zu ergreifen, die in jeder Rotorposition ein sicheres Anlaufen ermöglichen.

In dem europäischen Patent EP 1 436 882 B2 wird vorgeschlagen, durch eine Verschiebung des Rastmoments gegenphasig zum elektrischen Drehmoment ein nahezu konstantes Drehmoment über eine ganze Umdrehung zu erreichen. Dies erfolgt dadurch, dass ein geschlossener Blechschnitt verwendet wird, bei dem die Polbögen gegenüber der konventionellen Geometrie seitlich an den Rotor angesetzt sind und Ausnehmungen in der dem Rotor und dem magnetischen Spalt abgewandten Seite des Blechpakets vorgesehen und gegenüber der konventionellen Magnetflussrichtung um 90° winklig versetzt angeordnet sind. Nachteilig an dieser Ausführungsform ist, dass ein geschlossener Blechschnitt im Vergleich zu einem offenen, u-förmigen Blechschnitt fertigungstechnisch kompliziert ist, da die Statorwicklungen nicht einfach über die Schenkel geschoben werden können. Darüberhinaus benötigt diese geschlossene Ausführungsvariante des Blechpakets mehr Material, da über die geschlossenen Stege neben der Bohrung magnetischer Fluss verloren geht. Der Wirkungsgrad einer derartigen Anordnung ist daher vergleichsweise gering.

Es ist Aufgabe der Erfindung, einen einphasigen Synchronmotor bereit zu stellen, der ein erhöhtes Anlaufmoment aufweist und einen sicheren Anlauf in jeder Rotorlage auch bei hohem Reibmoment gewährleistet.

Diese Aufgabe wird durch einen Synchronmotor mit den Merkmalen des Anspruchs 1 gelöst. Vorteilhafte Weiterbildungen der Erfindung sind in den Unteransprüchen formuliert und werden nachfolgend beschrieben, wobei diese Merkmale sowohl für sich betrachtet als auch in Kombination miteinander realisiert werden können.

Erfindungsgemäß wird ein einphasiger Synchronmotor mit mindestens einer Statorwicklung, einem u-förmigen geblechten Statorpaket mit zwei Polschenkeln und mit einem permanentmagnetischen Rotor vorgeschlagen, der zwischen den Polschenkeln unter Bildung eines magnetischen Spaltes angeordnet ist, wobei genau ein zusätzliches magnetisches Mittel oder mehrere zusätzliche magnetische Mittel, die sich im Falle einer geraden Anzahl nicht diametral gegenüberliegen, in radialer Richtung in einem Abstand neben dem Rotor angeordnet ist bzw. sind, der zwischen der halben und der vierfachen, insbesondere der doppelten Breite des magnetischen Spalts liegt.

Die Anordnung eines einzigen magnetischen Mittels, oder die Anordnung mehrerer magnetischer Mittel, die sich nicht diametral gegenüberliegen, im Falle einer gerade Anzahl magnetischer Mittel also nicht symmetrisch entlang dem Umfang des Motorbohrung verteilt sind, bewirken eine derartige Veränderung des Rastmoments, dass es bezogen auf eine volle Rotorumdrehung nicht mehr die halbe Periode des elektrischen Drehmoments, sondern dieselbe Periode wie das elektrische Drehmoment besitzt. Die wird dadurch erreicht, dass die Nulldurchgänge des Rastmoments im Bereich der den natürlichen Ruhestellungen entsprechenden Rotorlagen für den unteren und den oberen halben Rotorumfang entgegengesetzt verschoben werden. Dies hat wiederum zur Folge, dass der Rotor bei Abschaltung der Versorgungsspannung in einer Ruhestellung stehen bleibt, in der beim erneuten Anlaufen ein ausreichendes elektrisches Moment erzeugt wird.

Die Verwendung eines einzigen zusätzlichen magnetischen Mittels ist dabei besonders vorteilhaft, da weniger Bauteile zur Erzielung einer magnetischen Unsymmetrie im Rotor benötigt werden und damit Kosten und bautechnischer Aufwand reduziert werden können.

Alternativ können auch zwei oder mehr zusätzliche magnetische Mittel verwendet werden, wobei sich die magnetischen Mittel im Falle einer geraden Anzahl nicht diametral gegenüberliegen dürfen. Denn eine symmetrische Beeinflussung des magnetischen Feldes würde dazu führen, dass das Rastmoment bezogen auf eine volle Rotorumdrehung nur die halbe Periode des elektrischen Drehmoments aufweist.

Vorzugsweise entspricht der Abstand, in dem das oder die zusätzlichen magnetischen Mittel radial neben dem Rotor angeordnet sind im Wesentlichen der Breite des magnetischen Spalts, damit die von ihm auf den Rotor ausgeübte magnetische Kraft möglichst vollständig genutzt wird.

Das magnetische Mittel oder die magnetischen Mittel können in Richtung der Öffnung des u-förmigen Statorpakets gesehen zwischen den Polschenkeln angeordnet sein, d.h. radial außerhalb der Bohrung des Synchronmotors und im Umfangsbereich des Rotors in dem zwischen den Polschenkeln gebildeten Raum angeordnet sein. Das magnetische Mittel ist damit in einem Winkel zu der natürlichen Ruheposition des Rotors im unbestromten Zustand des Motors versetzt. Je größer dieser mechanische Winkel ausgebildet wird, umso größer ist die Verschiebung des Nulldurchgangs des Rastmoments, d.h. der mechanischen Raststellung des Rotors, und desto höher ist das elektrische Drehmoment in diesen Rotorlagen, aus denen der Rotor anlaufen muss.

Vorzugsweise kann dieser Winkel im Wesentlichen 90° betragen, so dass das magnetische Mittel in Richtung der Öffnung des u-förmigen Statorpakets etwa mittig zwischen den Polschenkeln, d.h. zwischen dem äußeren Ende des Polbogens des einen und dem äußeren Ende des Polbogens des anderen Polschenkels angeordnet sein. Dies hat zum einen den technischen Effekt, dass eine maximale Verschiebung des Rastmoments erzielt wird und damit in den sich einstellenden Ruhepositionen im unbestromten Zustand für den Anlauf ein maximales elektrisches Drehmoment zur Verfügung gestellt werden kann. Des Weiteren bietet eine mittige Anordnung ausreichenden Platzbedarf für die Anordnung des magnetischen Mittels. Ein weiterer Vorteil ist darüber hinaus die maximale Entfernung des magnetischen Mittels von den Polschenkeln, d.h. vom Blechpakte, so dass die über das magnetische Mittel geführte magnetische Streuung minimiert wird. Denn die Streuung ist umso geringer, je weiter das magnetische Mittel vom Blechpaket entfernt ist.

Vorzugsweise kann der Synchronmotor Teil einer Spaltrohrpumpe sein, so dass der Rotor von einem Spaltrohr umgeben ist. In dieser Ausführungsvariante kann das magnetische Mittel oder die magnetischen Mittel am Außenumfang des Spaltrohres angeordnet sein, vorzugsweise an diesem anliegen. Damit kann das magnetische Feld des magnetischen Mittels maximal auf den Rotormagneten einwirken. Der Abstand des magnetischen Mittels zum Rotor entspricht dann im Wesentlichen der Breite des magnetischen Spalts, da das Spaltrohr innenseitig am Stator anliegt.

Das magnetische Mittel oder die magnetischen Mittel sind vorzugsweise als Permanentmagnet bzw. Permanentmagnete ausgebildet. Dies hat den Vorteil, dass der Synchronmotor konstruktiv einfach ausgebildet bleibt, da sie baulich einfach montiert werden können und kein hoher technischer Aufwand benötigt wird. Da Permanentmagnete im Übrigen preisgünstig hergestellt werden können, führt dies auch zu einer preisgünstigen Herstellung des erfindungsgemäßen Synchronmotors. Ein Permanentmagnet oder Permanentmagnete bietet bzw. bieten auch den Vorteil der einfachen Nachrüstbarkeit, wenn erst bei der Anwendung im Feld Startprobleme festgestellt werden.

Alternativ kann das magnetische Mittel bzw. die magnetischen Mittel auch durch eine fremderregte elektromagnetische Wicklung bzw. elektromagnetische Wicklungen gebildet sein. Dies hat wiederum den Vorteil, dass die magnetische Unsymmetrie, d.h. die zusätzlich auf den Rotor wirkende magnetische Kraft gezielt an- und abschaltbar ist, d.h. bei Bedarf nur für den Anlauf zugeschaltet und anderenfalls abgeschaltet werden kann, so dass im laufenden Betrieb ein symmetrisches Magnetfeld besteht und die Lager symmetrisch belastet und damit geschont werden. Weiterhin kann bei einer elektromagnetischen Wicklung durch gezielte Einstellung des sie durchfließenden Stroms auch die magnetische Feldstärke und damit der Grad der Beeinflussung des Rastmoments des Rotormagneten gezielt eingestellt werden. So kann beispielsweise mit zunehmender Alterung des Synchronmotors der Strom durch die elektromagnetische Hilfswicklung allmählich erhöht werden, so dass auch das von dem magnetischen Mittel erzeugte Magnetfeld zunehmend verstärkt wird und damit das Rastmoment zunehmend verschoben wird. Hiermit ist eine dynamische Anpassung des Anlaufmoments an die Alterung des Synchronmotors realisierbar.

In der Ausführung des magnetischen Mittels als Permanentmagnet sollte dieser vorzugsweise in radialer Richtung eine Dicke aufweisen, die mindestens etwa einem Drittel des Rotordurchmessers entspricht. Hierdurch wird verhindert, dass der Permanentmagnet im Einflussgebiet des Streufeldes der Statorspulen entmagnetisiert wird.

In der Ausführung des Synchronmotors mit einem Spaltrohr ist es vorteilhaft dieses aus einem nicht magnetischen Material auszubilden, damit kein Streufluss durch das Spaltrohr verloren geht.

Für eine zusätzliche Erhöhung des Anlaufmoments kann des Weiteren vorgesehen werden, dass die Polschenkel im Bereich ihrer Polbögen jeweils eine Ausnehmung aufweisen, wie dies aus der deutschen Patentanmeldung DE 10 2006 058143 A1 bekannt ist.

Weitere Vorteile und Merkmale der Erfindung werden nachfolgend anhand einer beispielhaften Ausführungsvariante und den beigefügten Figuren erläutert.

Es zeigen:
Figur 1: Kurven der elektrischen Drehmomente M+,M- für konstanten Strom mit positivem (M+) und negativem (M-) Spitzenwert und des Rastmoments Mcog eines konventionellen Synchronmotors.
Figur 2: Vergrößerung der Drehmomentkurven gemäß Figur 1 um Rotorposition 90°.
Figur 3: Kurven der elektrischen Drehmomente M+,M- für konstanten Strom mit positivem (M+) und negativem (M-) Spitzenwert und des Rastmoments Mcog bei 90° Rotorposition für einen Synchronmotor mit Ausnehmungen in den Polschenkeln.
Figur 4: Rastmoment eines Synchronmotors mit Ausnehmungen in den Polschenkeln, Kurve A; Rastmoment eines Synchronmotors mit Ausnehmungen und zusätzlichem Hilfsmagneten, Kurve B.
Figur 5: Kurven der elektrischen Drehmoment M+,M- für konstanten Strom mit positivem (M+) und negativem (M-) Spitzenwert und des Rastmoments Mcog eines Synchronmotors mit Ausnehmungen und zusätzlichem Hilfsmagneten
Figur 6: Vergrößerung des Diagramms nach Figur 5 um die Rotorlage 90°
Figur 7: Vergrößerung des Diagramms nach Figur 5 um die Rotorlage 270°
Figur 8: erfindungsgemäßer Synchronmotor mit Ausnehmungen und Hilfsmagneten

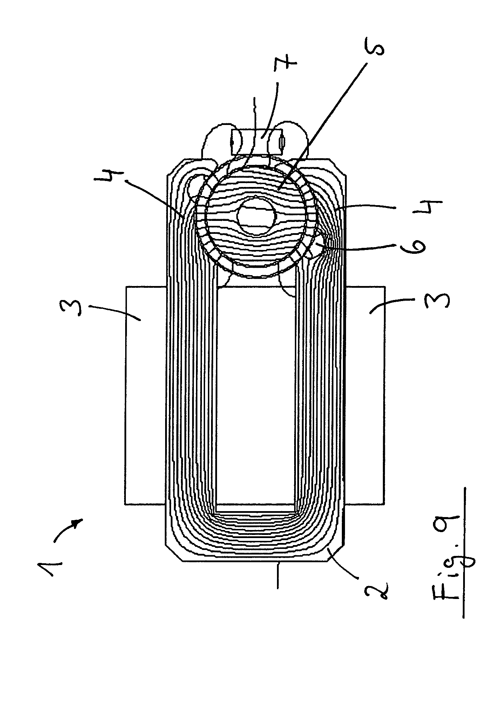

Figur 9: erfindungsgemäßer Synchronmotor nach Figur 8 mit Magnetfeldlinien

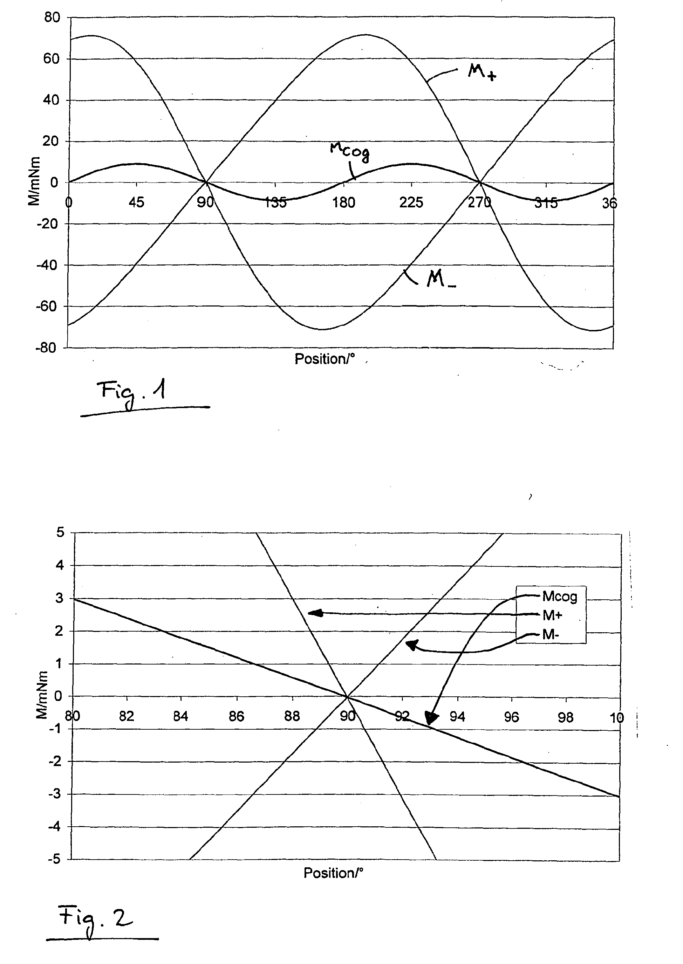

Einphasige Synchronmotoren erzeugen über eine Rotorumdrehung kein konstantes Drehmoment. Bei zweipoligen Motoren gibt es zwei Positionen pro Rotorumdrehung in denen kein elektrisches Drehmoment erzeugt wird. Figur 1 zeigt in Kurve M+ das elektrische Drehmoment für konstanten Strom mit positivem und in Kurve M- das elektrische Drehmoment für konstanten Strom mit negativem Spitzenwert sowie das Rastmoment Mcog. Die Positionen ohne elektrisches Drehmoment sind bei 90° und 270° zu erkennen. Sie entsprechen denjengen Rotorlagen, in denen die Magnetpole des Rotormagneten zu den Polschenkeln ausgerichtet sind, d.h. mit diesen in einer Ebene liegen.

Figur 2 zeigt einen vergrößerten Ausschnitt der Figur 1 bei 90° Rotorposition. An dieser Rotorposition wird weder ein Rastmoment noch ein elektrisches Drehmoment bei Bestromung erzeugt. Da das Rastmoment in dieser Position und der äquivalenten Rotorposition bei 270° einen Nulldurchgang aufweist, bleibt der Motor nach dem Ausschalten auf Grund des Rastmoments genau in einer dieser Lagen stehen.

In den Nulldurchgängen des Rastmoments bei 0 und 180 Grad wird der Motor nicht stehen bleiben, da diese Positionen instabil sind. Bei kleinster Auslenkung aus dieser nur theoretischen Position ohne Rastmoment wird der Rotor durch das Rastmoment in die nächste Ruheposition gezogen. Sofern der erfindungsgemäße Synchronmotor zufällig in einer dieser Positionen stehen bleibt, ist dies unkritisch, da spätestens beim Einschalten durch den Strom ein sehr hohes Drehmoment erzeugt wird.

Problematisch wird die Existenz der Ruhepositionen bei 90° und 270° Grad beim Anlauf, da in genau diesen Positionen kein Anzugsmoment erzeugt wird und der Motor nicht starten kann. Auch in der näheren Umgebung dieser Rotorpositionen wird kein Anlauf erfolgen, wenn das Haftreibmoment größer als das Anzugsmoment ist.

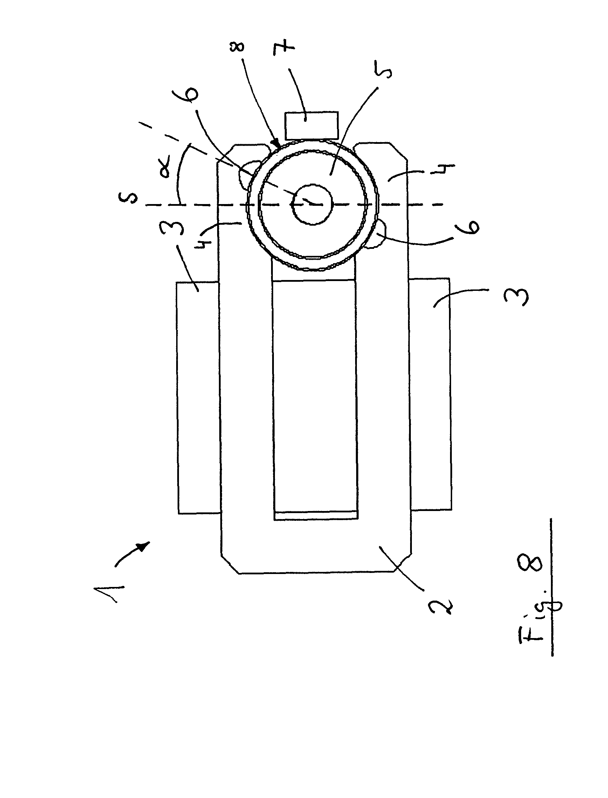

Figur 8 zeigt einen erfindungsgemäßen einphasigen Synchronmotor 1, mit zwei Statorwicklungen 3, einem u-förmigen geblechten Statorpaket 2 mit zwei Polschenkeln 4 und einem permanentmagnetischen Rotor 5, der zwischen den Polschenkeln 2 unter Bildung eines magnetischen Spaltes angeordnet ist. Ein Permanentmagnet 7 ist in radialer Richtung neben dem Rotor 5 in einem Abstand angeordnet, der im Wesentlichen der radialen Breite des magnetischen Spalts entspricht. Der Permanentmagnet 7 liegt am äußeren Umfang eines Spaltrohres 8 an. Da das Spaltrohr 8 im äußersten Umfangsbereich des mechanischen Spalts zwischen Statorpolen und Rotor 5 liegt, d.h. an den Polbögen der Polschenkel 4 anliegt, ist der radiale Abstand zwischen dem Permanentmagneten 7 und dem Rotor 5 gleich der Breite des magnetischen Spalts, die etwa 1,5 mm beträgt. Für die Verwendung einer Halterung für den Permanentmagneten 7 kann der Abstand auch etwas größer sein, beispielsweise 2,5 mm. Weiterhin weisen die Polschenkel 4 jeweils eine Ausnehmung 6 auf. Die Ausnehmungen 6 liegen sich diametral gegenüber und sind um einen Winkel α gegenüber der Symmetrieebene S der Statorpole versetzt.

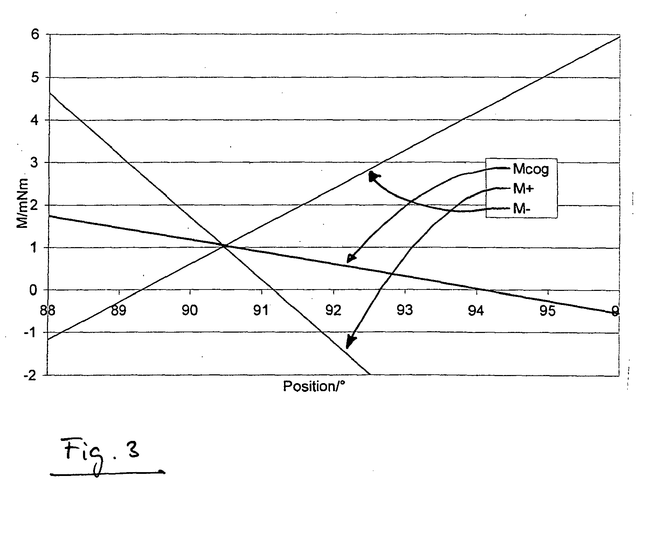

Die Ausnehmungen 6 bilden eine kleinen Unsymmetrie im Blechschnitt die eine Verschiebung des Rastmoments gegenüber dem Verlauf des elektrischen Moments erzeugt und dadurch den Anlauf bei einem geringen Haftreibmoment ermöglicht. Figur 3 zeigt den Verlauf des Rastmoments Mcog zusammen mit dem elektrischen Drehmoment bei konstantem positiven M+ und negativen Strom M- um die Rotorlage 90° für einen Synchronmotor mit Ausnehmungen im Blechschnitt.

Der Nulldurchgang des Rastmoments und damit die Ruheposition liegt bei 94° und ist damit um 4° verschoben. In dieser Position beträgt das elektrische Drehmoment, d.h. das Anlaufmoment aus der neuen Ruhelage 94° ca. 4 mNm. Demgegenüber beträgt das minimale Drehmoment zwischen 90° und 91° nur ca. 1 mNm. Durch die starke Verschiebung der Unsymmetrie wurde dadurch eine Vervielfachung des Anzugsmoments erreicht.

Durch eine hohe Reibung im Motor, z.B. 3 mNm, kann es dazu kommen, dass der Rotor nicht in der Ruheposition bei 94° stehen bleibt, sondern in einem Winkelbereich zwischen 89° und 93°. In diesem Bereich ist das Anzugsmoment bei maximalem Strom dann kleiner oder gleich dem Reibmoment und ein Anlaufen des Motors wird verhindert.

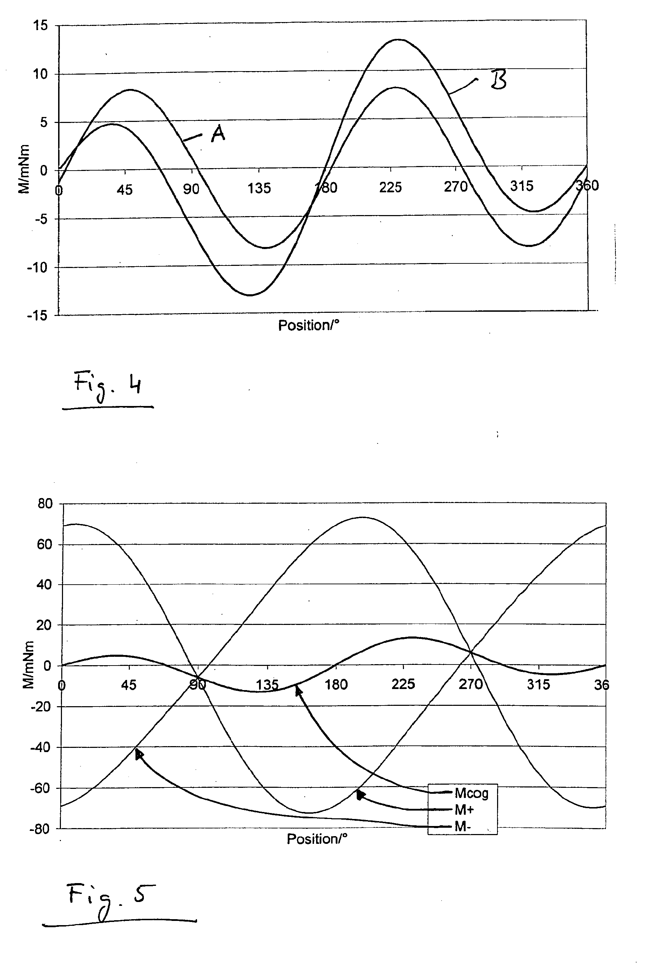

Durch die erfindungsgemäße Anordnung eines zusätzlichen magnetischen Mittels, insbesondere eines Permanentmagneten 7, in radialer Richtung neben dem Rotor 5, in einem Abstand, der etwa der radialen Breite des magnetischen Spalts entspricht, wird das Anzugsmoments in den kritischen Positionen im Bereich um 90° und 270° Grad erhöht, so dass ein sicherer Anlauf auch bei erhöhtem Reibmoment immer gewährleistet ist. Fig. 4 zeigt die Auswirkung der zusätzlichen Magnetkraft auf das Rastmoment, d.h. das unbestromte Drehmoment eines erfindungsgemäßen Synchronmotors 1 gemäß Fig. 8, siehe Kurve B, gegenüber einem Synchronmotor 1 ohne Hilfsmagneten aber mit Ausnehmungen in den Polschenkeln 4, siehe Kurve A. Anstelle einer nur leichten Verschiebung des Rastmomentverlaufs über die Rotorposition um 4° erfolgt eine Erhöhung der Amplitude in den Umfangsabschnitten um den Symmetriepunkt 180° Rotorposition und eine Reduzierung der Amplitude in den Umfangsabschnitten um den Symmetriepunkt 0° bzw. 360° Rotorposition. Dies hat zur Folge, dass die natürlichen Nulldurchgänge des Rastmoments bei 90° und 270° entgegengesetzt verschoben werden, nämlich auf 69° und auf 291°. Die unterschiedliche Amplitudenänderung führt dazu, dass die Periode der Kurve B eine volle Rotorumdrehung beträgt, während die Periode der Kurve A eine halbe Rotorumdrehung beträgt.

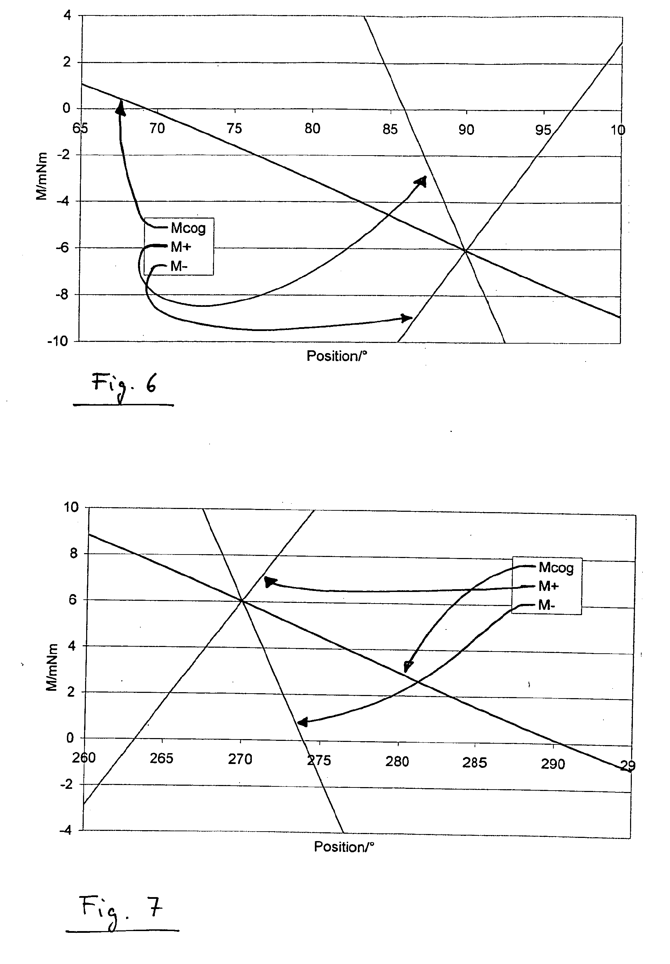

Fig. 5 zeigt das elektrische Drehmoment für konstanten Strom mit positivem M+ und negativem Spitzenwert M- und das unbestromte Drehmoment Mcog des Synchronmotors mit dem zusätzlichem Magnet gemäß Fig. 8 zur Verbesserung der Startverhaltens. Die Bereiche geringen Drehmoments befinden sich auch hier wieder bei 90° und 270° Rotorposition. Die Figuren 6 und 7 zeigen vergrößerte Abschnitte bei 90° und 270°.

Fig. 6 zeigt die Drehmomentverläufe für den Ausschnitt um die 90° Rotorposition. Entscheidend für den Start bei deutlich erhöhter Reibung ist allein das Maximum des Betrags der drei gezeigten Drehmomentverläufe und beträgt immer mindestens 6 mNm. Das Vorzeichen hat nur Einfluss auf die Startdrehrichtung, welche zusätzlich noch von der Polarität der Spannung im Einschaltzeitpunkt abhängt. Der Ausschnitt für 270° Rotorposition ist in Fig. 7 dargestellt. Es zeigt sich das gleiche Verhalten wie bei 90° nur mit entgegengesetztem Vorzeichen.

Besonders vorteilhaft ist neben dem hohen Mindestanzugsmoment auch die stark verschobene Ruheposition, die dem Nulldurchgang des unbestromten Drehmoments entspricht und bei 69° bzw. 291° liegt. In diesen Rotorpositionen entsteht bei Bestromung ein maximales Drehmoment von ca. 25 mNm, das das Drehmoment von nur 4 mNm bei 94° bzw. 274° durch die reine Unsymmetrie des Blechpakets um ein Vielfaches übersteigt.

Ein interessanter Aspekt für Pumpenanwendungen ist die zusätzliche Axialkraft, die durch den Magnet bei Auslenkung des Rotors oder axialer Verschiebung entsteht. Diese Axialkraft bietet die Option auf das Axiallager zu verzichten. Dadurch werden Kosten eingespart und gleichzeitig eine Verbesserung des Wirkungsgrades erreicht.

Durch eine Kombination des Einschaltzeitpunkts mit der Spannungspolarität und der Rotorposition ist ein Anlauf in eine Vorzugsdrehrichtung erreichbar. Dies hat bei Pumpen den Vorteil, dass vorzugsgerichtete Laufräder eingesetzt werden können, die einen besseren Wirkungsgrad aufweisen.

Bei der Verwendung des erfindungsgemäßen Synchronmotors 1 bei einer Spaltrohrpumpe kann der zusätzliche Magnet 7 über eine Halterung auf dem Spaltrohr 8 bzw. Spalttopf 8 platziert werden. Die einfachste und effektivste Anordnung des Magneten 7 ist mittig an der Unterseite und zwischen dem offenen u-förmigen Blechpaket, da hier am meisten Platz vorhanden und der Streufluss des Magneten über das Blechpaket am geringsten ist. An dieser Stelle ist der Magnet 7 auch fast keinem Spulenfluss ausgesetzt, so dass spulenbedingt keine Entmagnetisierung des Magneten 7 auftreten kann. Lediglich eine geringe Entmagnetisierung kann durch den permanentmagnetischen Rotor 5 erfolgen. Daher ist eine gewisse Mindestdicke in Abhängigkeit vom Magnetmaterial einzuhalten. Bei Anordnung des Magneten im Einflussgebiet des Spulenflusses ist die Magnetdicke größer zu wählen, um Entmagnetisierung zu verhindern. Der Rotormagnet 5 hat durch seine Lage im Rückschluss einen besseren Arbeitspunkt als der Hilfsmagnet 7 in Luft.

Damit ein möglichst großer Fluss auf den Rotormagneten 5 wirkt, ist der Magnet 7 nahe am Luftspalt des Motors 1 anzuordnen. Für Nassläufer ist dies direkt auf dem Spalttopf 8 bzw. Spaltrohr 8 gegeben, wobei der Spalttopf vorzugsweise aus einem nicht magnetischen Material gefertigt wird, damit der Fluss nicht als Streuung über den Spalttopf 8 verloren geht. Der Spalttopf 8 trägt neben der Erhöhung des Streuflusses auch zur Flussführung des Nutzflusses bei. Je größer die Entfernung vom Rotormagneten 5 ist, desto geringer ist der Einfluss und umso mehr Magnetmaterial muss verwendet werden.

Für die Anwendung in Brauchwasserpumpen bietet sich die Verwendung eines Ferrit-Magneten an, da er besonders kostengünstig und seine Magnetkraft ausreichend ist. Grundsätzlich kann aber auch jedes andere Magnetmaterial verwendet werden, beispielsweise ein Magnet aus Neodym, Eisen und Bor (NdFeB).

Die Magnetisierungsrichtung des Magneten ist bestenfalls durch die große axiale Fläche des Magneten zu wählen, die parallel zum Spalttopf angeordnet wird, so dass der Magnetfluss diametral in den Luftspalt eintritt. Fig. 8 zeigt einen Querschnitt durch den erfindungsgemäßen Synchronmotor 1 mit dem Rotormagneten 5 und dem Hilfsmagneten 7, der vor Kopf angeordnet ist. Der Feldverlauf zeigt die Überlagerung des Flusses des drehbaren Rotormagneten 5 mit dem Fluss des feststehenden Hilfsmagneten 7. Die dadurch erzeugte Unsymmetrie im Flussverlauf, bewirkt die Verschiebung des Rastmoments durch Überlagerung mit dem Drehmoment zwischen den beiden Magneten 5, 7.

## Patentansprüche

1. Einphasiger Synchronmotor (1) mit mindestens einer Statorwicklung (3), einem u-förmigen geblechten Statorpaket (2) mit zwei Polschenkeln (4) und einem permanentmagnetischen Rotor (5), der zwischen den Polschenkeln (2) unter Bildung eines magnetischen Spaltes angeordnet ist, **dadurch gekennzeichnet, dass** genau ein zusätzliches magnetisches Mittel (7) oder mehrere zusätzliche magnetische Mittel (7), die sich nicht diametral gegenüberliegen, in radialer Richtung in einem Abstand neben dem Rotor (5) angeordnet ist bzw. sind, der zwischen der halben und der vierfachen Breite des magnetischen Spalts liegt.

2. Synchronmotor (1) nach Anspruch 1, **dadurch gekennzeichnet, dass der** Abstand im Wesentlichen der Breite des magnetischen Spalts liegt.

3. Synchronmotor (1) nach einem der vorherigen Ansprüche, **dadurch gekennzeichnet, dass** das/ die magnetische(n) Mittel (7) in Richtung der Öffnung des u-förmigen Statorpakets (2) zwischen den Polschenkeln (4) angeordnet ist/ sind.

4. Synchronmotor (1) nach einem der vorherigen Ansprüche 1 ,2 oder 3, **dadurch gekennzeichnet, dass** das magnetische Mittel (7) in Richtung der Öffnung des u-förmigen Statorpakets (2) mittig zwischen den Polschenkeln (4) angeordnet ist.

5. Synchronmotor (1) nach einem der vorherigen Ansprüche, **dadurch gekennzeichnet, dass** der Rotor von einem Spaltrohr (8) umgeben ist, und das/ die magnetische(n) Mittel (7) am Außenumfang des Spaltrohres angeordnet ist/ sind, vorzugsweise an diesem anliegt/ anliegen.

6. Synchronmotor (1) nach einem der vorherigen Ansprüche, **dadurch gekennzeichnet, dass** das oder die magnetische(n) Mittel (7) ein Permanentmagnet/ Permanentmagnete ist/ sind.

7. Synchronmotor (1) nach einem der vorherigen Ansprüche 1 bis 5, **dadurch gekennzeichnet, dass** das oder die magnetischen Mittel (7) eine fremderregte elektromagnetische Wicklung/ elektromagnetische Wicklungen ist/ sind.

8. Synchronmotor (1) nach Anspruch 6, **dadurch gekennzeichnet, dass** der Permanentmagnet (7) in radialer Richtung eine Dicke aufweist, die mindestens einem Drittel des Rotordurchmessers entspricht.

9. Synchronmotor (1) nach einem der Ansprüche 5 bis 8, **dadurch gekennzeichnet, dass** das Spaltrohr (8) aus einem nichtmagnetischen Material gebildet ist.

10. Synchronmotor (1) nach einem der vorherigen Ansprüche, **dadurch gekennzeichnet, dass** die Polschenkel (4) im Bereich ihrer Polbögen jeweils eine Ausnehmung (6) aufweisen.

11. Pumpe mit einem Synchronmotor (1) nach einem der vorherigen Ansprüche 1 bis 11.
